(19) Europäisches Patentamt
European Patent Office
Office européen des brevets

(11) **EP 2 793 056 B1**

(12) **EUROPÄISCHE PATENTSCHRIFT**

(45) Veröffentlichungstag und Bekanntmachung des Hinweises auf die Patenterteilung:
**20.09.2017   Patentblatt 2017/38**

(21) Anmeldenummer: **14164632.3**

(22) Anmeldetag: **14.04.2014**

(51) Int Cl.:
*G01T 1/29* (2006.01)      *G01T 1/36* (2006.01)
*G01N 23/207* (2006.01)      *G21K 1/06* (2006.01)
*G01N 23/20* (2006.01)

(54) **Vorrichtung und Verfahren zur Bestimmung der energetischen Zusammensetzung von elektromagnetischen Wellen**

Device and method for determining the energetic composition of electromagnetic waves

Dispositif et procédé de détermination de la composition énergétique d'ondes électromagnétiques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2013   DE 102013207160**

(43) Veröffentlichungstag der Anmeldung:
**22.10.2014   Patentblatt 2014/43**

(73) Patentinhaber:
• **IFG - Institute For Scientific Instruments GmbH
12489 Beriln (DE)**
• **Helmholtz-Zentrum Berlin für Materialien und Energie GmbH
14109 Berlin (DE)**

(72) Erfinder:
• **Erko, Alexei
14129 Berlin (DE)**
• **Langhoff, Norbert
12526 Berlin (DE)**
• **Bjeoumikhov, Aniuar
12526 Berlin (DE)**

(74) Vertreter: **Gulde & Partner
Patent- und Rechtsanwaltskanzlei mbB
Wallstraße 58/59
10179 Berlin (DE)**

(56) Entgegenhaltungen:
**DE-A1- 19 542 679      US-B1- 6 259 764**

• **FIRSOV A ET AL: "Novel wavelength-dispersive X-ray fluorescence spectrometer", JOURNAL OF PHYSICS: CONFERENCE SERIES, INSTITUTE OF PHYSICS PUBLISHING, BRISTOL, GB, Bd. 425, Nr. 15, 22. März 2013 (2013-03-22), Seite 152013, XP020243081, ISSN: 1742-6596, DOI: 10.1088/1742-6596/425/15/152013**
• **A Erko ET AL: "A Parallel Soft X-Ray fs Spectrometer", , 15. April 2010 (2010-04-15), XP055132969, Gefunden im Internet: URL:http://www.xfel.eu/sites/site_xfel-gmb h/content/e63594/e63596/e81220/e79814/e854 03/2010-03-25-slides-erko_eng.pdf[gefunden am 2014-08-04]**
• **A. ERKO ET AL: "New Developments in Femtosecond Soft X-ray Spectroscopy", AIP CONFERENCE PROCEEDINGS, 1. Januar 2010 (2010-01-01), Seiten 177-180, XP055087863, ISSN: 0094-243X, DOI: 10.1063/1.3463167**
• **REHANEK J ET AL: "A case study of novel X-ray Optics for FEL sources", JOURNAL OF PHYSICS: CONFERENCE SERIES, INSTITUTE OF PHYSICS PUBLISHING, BRISTOL, GB, Bd. 425, Nr. 5, 22. März 2013 (2013-03-22) , Seite 52013, XP020243228, ISSN: 1742-6596, DOI: 10.1088/1742-6596/425/5/052013**

**Beschreibung**

Die vorliegende Erfindung betrifft ein Verfahren und eine Vorrichtung zur Bestimmung der energetischen Zusammensetzung von elektromagnetischen Wellen, insbesondere betrifft die vorliegende Erfindung ein Verfahren und eine Vorrichtung zur simultanen Bestimmung der energetischen Zusammensetzung von elektromagnetischer Strahlung vom Terahertz-Bereich bis zum harten Röntgenbereich.

*Stand der Technik*

Wellenlängendispersive Spektrometer (WDS) werden eingesetzt, um eine hohe Effizienz und hohe Energieauflösungen in der Röntgenspektroskopie zu erreichen. Dabei wird die Strahlung an einem Gitter bzw. einem Kristall gestreut. Durch die Überlagerung der einzelnen gestreuten Strahlen kommt es zu richtungsabhängigen Interferenzen, die eine Wellenlängenabhängigkeit aufweisen. Das Erfassen der Interferenzen erfolgt durch eine sequentielle Veränderung des Auslesewinkels. Ein Energiespektrum wird schrittweise in der Brennebene eines refokussierenden Spiegels gemessen. Insgesamt befinden sich zwei oder drei optische Elemente in der Anordnung. Die Energieauflösung hängt dann von der geometrischen Anordnung (Form des Kristalls, Öffnungsspalt des Spektrometers) ab, aber auch von der Qualität des Kristalls, der optischen Elemente für die Strahlparallelisierung und -refokussierung sowie der Präzision der Spektrometermechanik. Speziell für geringe Energien haben WDS eine deutlich bessere Energieauflösung als EDS (Energiedispersive Spektrometer), jedoch sind WDS nicht geeignet zur Simultanmessung des Gesamtspektrums. Gerade in diesem niederenergetischen Bereich ist aber auch eine hohe Liniendichte vorhanden, die für empfindliche Analysen und eindeutige Identifikationen eine gute Energieauflösung erfordert.

Konventionell werden für WDS natürliche Kristalle, Beugungsgitter oder künstliche Schichtstrukturen verwendet.

Die sequentielle Messanordnung erfordert einen hohen Zeitaufwand, da jedes Element einzeln angefahren und analysiert werden muss. Darüber hinaus ergeben sich Probleme bei der Analyse unbekannter Proben, da nicht vorhersehbar ist, welche Elemente vorhanden sind, d.h. ein kompletter Spektren-Scan erforderlich ist. Man hat versucht, diesen Messzeitnachteil zu kompensieren durch den Aufbau von Mehrkanal-Spektrometern, bei denen für jeweils eine beschränkte Anzahl von Elementen ein gesondertes Spektrometer vorhanden ist. Das ist aber aufwendig und hat keine ausreichende Flexibilität. Darüber hinaus haben diese Spektrometer nur kleine Akzeptanzwinkel, so dass nur ein kleiner von der Probe kommender Strahlanteil erfasst wird und daher die Probe mit einer starken Anregungsintensität beaufschlagt werden muss, um ausreichende Fluoreszenzintensitäten zu erhalten.

Im harten Röntgenbereich (>2100 eV) besteht eine Möglichkeit in der Verwendung einer von-Hamos-Geometrie für den Spektrometeraufbau. Hier wird die von einer Punktquelle kommende Strahlung durch einen großen Kristall dispergiert. Durch die Variation des Einfallswinkels der Strahlung auf den Kristall ergibt sich eine ortsabhängige Abbildung des Spektrums, d.h. das gesamte Spektrum wird auf einer Linie abgebildet und kann dort simultan mit einem ortsabhängigen Detektor erfasst werden. Die Brillanz derartiger Spektrometer ist gut. Allerdings ergeben sich durch die beschränkte Verfügbarkeit von Kristallen mit großen Gitterkonstanten besonders im niederenergetischen Bereich Einschränkungen und es sind große kostenaufwendige Kristalle und Detektoren für die Abdeckung eines breiten Energiebereiches erforderlich. Aber solche Spektrometer können im weichen Röntgen- und UV-Bereich nicht verwendet werden, da die üblicherweise eingesetzten HOPG Kristalle eine zu geringe Periode haben.

Darüber hinaus gibt es weitere Anordnungen, die durch die Verwendung von Fresnel-Zonen-Platten die Dispersion erzeugen. Bei Fresnel-Strukturen erfolgt eine Überlagerung von phasenverschobenen Strahlanteilen und deren Interferenz. Bei den verwendeten Strukturen handelt es sich um Transmissions-Zonenplatten, bei denen die Phasenverschiebungen durch Transmissionsunterschiede in den Zonen erzeugt werden. Es erfolgt eine energieabhängige Fokussierung auf der Zonenachse, d.h., dass das Spektrum ortsabhängig auf der optischen Achse der Zonenplatte abgebildet wird.

DE 195 42 679 A1 offenbart ein Verfahren und eine Vorrichtung zur spektralen Zerlegung und Fokussierung von Röntgenstrahlung, wobei die Röntgenstrahlung einer bestimmten Energie mittels einer reflektierenden Zonenplatte auf einen möglichst kleinen Punkt eines Detektors fokussiert wird. Die Fokussierung auf einen möglichst kleinen Punkt dient der hochauflösenden Bestimmung von Emissions- oder Absorptionslinien einer Röntgenquelle und beabsichtigt insbesondere die Verwendung einer planaren Zonenplatte, die zur Erreichung einer geringen Oberflächenrauhigkeit (durch Polieren) gegenüber einer gekrümmten Zonenplatte für Winkeltangentenfehler weniger anfällig ist.

US 6,259,764 B1 offenbart eine Zonenplatte mit unterschiedlichen Bereichen zur Erzeugung unterschiedlicher Brennpunkte, wobei die unterschiedlichen Bereiche voneinander getrennt sind.

Die genannten Anordnungen haben den Nachteil, dass infolge der technologischen Bedingungen für die Herstellung derartiger Zonenplatten der Akzeptanzwinkel sehr klein ist und damit die Brillanz der Spektrometer gering ist und dass die Effektivität der Zonenplatten für höher energetische Strahlung gering ist, da sich für hochenergetische Strahlung keine ausreichenden Absorptionsunterschiede in den Zonen erzeugen lassen. Eine Registrierung des Spektrums wird durch eine Verschiebung des Detektors auf der Zonenplatten-Achse erreicht, d.h. auch hier ist nur eine sequentielle Beobachtung des Spektrums möglich.

DE 10 2007 048 743 B4 offenbart eine Vorrichtung zur Spektroskopie, mit der eine simultane Registrierung der einzelnen Energien mit einer hohen Auflösung über einen breiten Energiebereich ermöglicht wird. Zwar erfolgt eine Auftrennung der unterschiedlichen Wellenlängen und separate Fokussierung derselben durch unterschiedliche Bereiche der Zonenplatte, jedoch liegen die Fokusse der unterschiedlichen Wellenlängen nicht exakt in der Detektorebene. Vielmehr befindet sich der Fokus höchstens einer Wellenlänge in der Detektorebene, so dass das Signal für diese Wellenlänge exakt gemessen werden kann. Jedoch "verschmieren" die Signale der anderen Wellenlängen erheblich, weil die Fokusse entweder vor oder hinter der Detektorebene liegen. Ein gekrümmter Detektor würde jedoch einen erheblichen Mehraufwand bedeuten. Aufgrund der genannten Nachteile sind einerseits die Auflösung und andererseits die Breite des messbaren Energiebereichs beschränkt, da der Abstand des Fokus von der Detektorebene mit dem energetischen Abstand der detektierten Wellenlänge zu derjenigen Wellenlänge korrespondiert, auf deren Fokus die Detektorebene eingestellt wurde.

Gemäß DE 195 42 679 A1 wird eine reflektierende Zonenplatte verwendet, wobei nur ein achsenfernes Teilstück (off-axis Zonenplatte) genutzt wird. Die von der Quelle ausgehende Strahlung wird mit Hilfe einer elliptischen Diffraktionsstruktur in einen Brennfleck geringer Abmessungen fokussiert. Zur Messung des Spektrums wird die Wellendispersion in der Diffraktionsebene verwendet. Der Nachteil dieser Lösung ist der relativ geringe Messbereich für die Energie (< 5 %) wegen der Diffraktionsverschmierung des Brennflecks (chromatische Aberration) für Energien außerhalb des zentralen Bereiches.

*Offenbarung der Erfindung*

Es ist daher Aufgabe der vorliegenden Erfindung, ein Verfahren und eine Vorrichtung zur Spektroskopie, insbesondere zur Röntgenspektroskopie anzugeben, mit dem eine simultane Registrierung der einzelnen Energien mit vergleichsweise höherer Auflösung, höherer Lichtstärke und/oder über einen vergleichsweise breiteren Energiebereich ermöglicht wird. Eine weitere Aufgabe der vorliegenden Erfindung besteht darin, das Spektrum der Röntgenstrahlung schnell, mit hoher Auflösung und mit preiswerten Komponenten detektieren zu können.

Diese Aufgaben werden erfindungsgemäß durch eine Vorrichtung mit den im Anspruch 1 genannten Merkmalen gelöst. Bevorzugte Ausgestaltungen der Erfindung sind in den Unteransprüchen enthalten.

Ein besonderer Vorteil der erfindungsgemäßen Vorrichtung besteht darin, eine simultane Registrierung mit höherer spektraler Auflösung und größerer Breite des messbaren Energiebereichs zu realisieren. Hierdurch kann einerseits ein sequentielles Auslesen für die einzelnen Wellenlängenbereiche vermieden werden, so dass entsprechende Messungen wesentlich schneller realisiert und alle in diesem Energiebereich befindlichen Elemente erfasst werden können. Andererseits ist es möglich, die Strahlung unterschiedlicher Wellenlängen jeweils mit hoher Abbildungsqualität in unterschiedliche Empfängerbereiche der Detektorebene zu fokussieren, wobei die spektrale Auflösung aufgrund des geringen erreichbaren Fokusdurchmessers in der Detektorebene deutlich erhöht werden kann.

Gemäß einem Aspekt der Erfindung wird eine Vorrichtung zur Bestimmung eines Spektrums von elektromagnetischen Wellen einer Quelle offenbart, aufweisend: mindestens eine reflektierende Zonenplatte und mindestens einen ortsauflösenden Detektor, wobei die reflektierende Zonenplatte eine Vielzahl vordefinierter, nebeneinander angeordneter, wellenlängen-selektiver Bereiche und der ortsauflösende Detektor eine Vielzahl korrespondierender Empfängerbereiche aufweist, wobei die wellenlängen-selektiven Bereiche jeweils eine Vielzahl reflektierender, bogenförmig ausgebildeter Abschnitte umfassen, die sich ausschließlich (und vorzugsweise kontinuierlich) über den jeweiligen wellenlängen-selektiven Bereich erstrecken, wobei die bogenförmig ausgebildeten Abschnitte jeweils einen Teil einer Ellipse ausbilden, wobei sich die bogenförmig ausgebildeten Abschnitte über mindestens 10% des Umfangs der jeweiligen Ellipse erstrecken, wobei die bogenförmig ausgebildeten Abschnitte (20) zwischen benachbarten wellenlängen-selektiven Bereichen (14) diskontinuierlich ausgebildet sind, bevorzugt also separat nebeneinander angeordnet sind.

Dadurch, dass sich die reflektierenden, bogenförmig ausgebildeten Abschnitte ausschließlich mit bestimmten räumlichen und energetischen Abständen über den jeweiligen wellenlängen-selektiven Bereich erstrecken, ist es möglich, jeden wellenlängen-selektiven Bereich derart auszubilden, dass die Fokussierung für jede Wellenlänge nicht nur quer zur Ausbreitungsrichtung der elektromagnetischen Wellen erfolgt, sondern dass die Position des Fokus derart eingestellt wird, dass die Fokusse sämtlicher Wellenlängen in der Detektorebene liegen. Die Energieauflösung wird in diesem Fall durch den Energieabstand zwischen den bogenförmig ausgebildeten Abschnitten und durch die Detektorpixelgröße definiert.

Eine reflektive Zonenplatte, bei der sich die reflektierenden, bogenförmig ausgebildeten Abschnitte kontinuierlich über sämtliche wellenlängen-selektiven Bereiche erstrecken (DE 10 2007 048 743 B4), kann zwar eine Separierung der Wellenlänge realisieren, jedoch ist es nicht möglich, die einzelnen Brennpunkte in einer Detektorebene anzuordnen. Mit anderen Worten wird erfindungsgemäß ein Vielkanalanalysator offenbart, während in DE 10 2007 048 743 B4 ein kontinuierlich funktionierendes Spektrometer beschrieben wird. Aufgrund der in der erfindungsgemäßen separaten Kanäle für Einzelelemente bzw. Energien erhöht sich das Signal-/Untergrundverhältnis im Vergleich zur vorgenannten Lösung. Die Technologie für die Herstellung der diskreten Kanalstrukturen ist vorteilhafterweise auch kostengünstiger als die Technologie für die Herstellung der kontinuierlichen Strukturen, da bei den kontinuierlichen Strukturen die Abmessungen der Elemente (elliptische Abschnitte) deutlich geringer sind. Größere Strukturelemente haben eine deutlich höhere Beugungseffizienz (bis zu einem Faktor 10) und verbessern die Spektrometereigenschaften. Aufgrund der diskreten Kanäle ist weiterhin eine Optimierung zwischen Fresnel-Spektrometer und Detektor möglich, d.h. es kann jeder fokussierende Kanal auf jeweils einen Pixel des Detektors ausgerichtet sein.

Vorzugsweise weisen die elliptisch ausgebildeten Abschnitte jeweils (vorzugsweise genau) einen Hauptscheitel auf. Vorzugsweise sind die Hauptscheitel jeweils vom Detektor weg gerichtet. Alternativ sind die Hauptscheitel jeweils zum Detektor hin gerichtet. Dies hängt von der Diffraktionsordnung ab.

Vorzugsweise sind die Hauptscheitel sämtlicher Abschnitte eines jeweiligen wellenlängen-selektiven Bereichs entlang einer Linie (sog. zweite Achse) angeordnet. Vorzugsweise sind die Tangenten an den Hauptscheitelpunkten sämtlicher Abschnitte eines jeweiligen wellenlängen-selektiven Bereichs jeweils parallel zueinander angeordnet. Vorzugsweise sind sämtliche Abschnitte eines jeweiligen wellenlängen-selektiven Bereichs voneinander beabstandet angeordnet.

Vorzugsweise ist die Anzahl wellenlängen-selektiver Bereiche durch die Pixelanzahl auf der horizontalen Linie in der Detektorebene, wo die Brennpunkte des Fresnelspektrometers liegen, bestimmt. Zum Beispiel im Fall eines Detektors mit 2000 Pixeln auf dieser Linie können dann beispielsweise 2000 elliptische Abschnitte hergestellt werden. Vorzugsweise ist die Vielzahl wellenlängen-selektiver Bereiche separat nebeneinander angeordnet, d.h. die elliptischen Abschnitte benachbarter wellenlängen-selektiver Bereiche gehen nicht kontinuierlich ineinander über. Besonders bevorzugt sind die elliptischen Abschnitte benachbarter wellenlängen-selektiver Bereiche voneinander beabstandet.

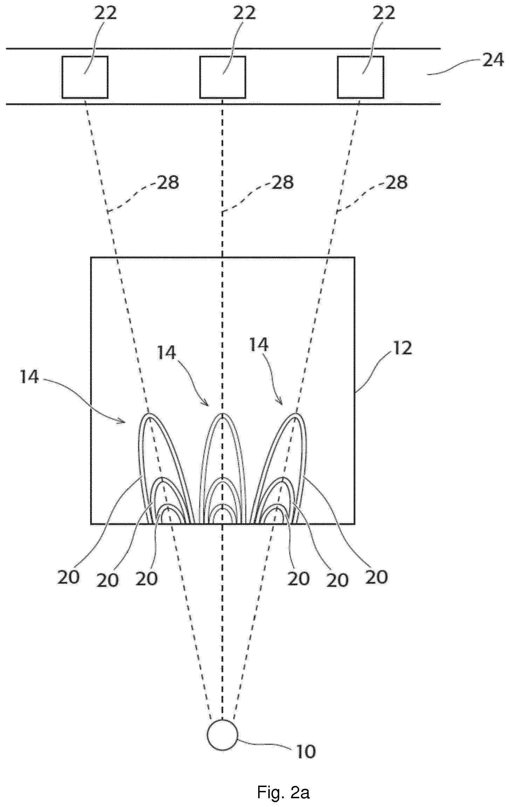

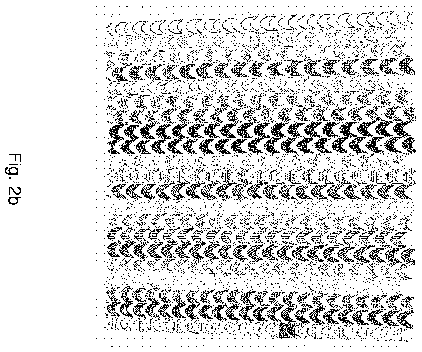

Vorzugsweise ist die Vielzahl der elliptisch ausgebildeten Abschnitte eines jeweiligen wellenlängen-selektiven Bereichs separat und beabstandet zueinander angeordnet. Vorzugsweise erstrecken sich die wellenlängen-selektiven Bereiche entlang einer ersten Achse (nebeneinander), während sich die elliptisch ausgebildeten Abschnitte (des jeweiligen wellenlängen-selektiven Bereichs) entlang einer zweiten Achse (also übereinander bezogen auf Fig. 2a und 2b) erstrecken, wobei die zweite Achse senkrecht zur ersten Achse verläuft.

Vorzugsweise schließen die zweiten Achsen benachbarter wellenlängen-selektiver Bereiche einen Winkel größer Null ein. Vorzugsweise ist dieser Winkel kleiner als 15°, bevorzugter kleiner als 10° und noch bevorzugter kleiner als 5°.

Der Gesamtwinkel zwischen dem ersten elliptischen Abschnitt und dem letzten Abschnitt wird durch die Detektordimensionen bestimmt. Die elliptisch ausgebildeten Abschnitte der wellenlängen-selektiven Bereiche sind vorzugsweise jeweils symmetrisch zu einer Linie ausgebildet, die senkrecht zur Tangente an dem jeweiligen Hauptscheitelpunkt verläuft.

Vorzugsweise erstrecken sich die elliptisch ausgebildeten Abschnitte über mindestens 15% des Umfangs, bevorzugter über mindestens 20% des Umfangs, bevorzugter über mindestens 25% des Umfangs, bevorzugter über mindestens 30% des Umfangs, bevorzugter über mindestens 35% des Umfangs, bevorzugter über mindestens 40% des Umfangs und noch bevorzugter über mindestens 45% des Umfangs der jeweiligen Ellipse.

Die Zahl der ellipsenförmigen Abschnitte bestimmt die Energieauflösung des Spektrometers entlang der horizontalen Achse auf dem Detektor. Ideal ist ein Pixel pro Kanal. In diesem Fall ist die minimale Strukturperiode groß und die Diffraktionseffizienz kann um einen Faktor von 10 gesteigert werden. Vorzugsweise erstrecken sich die elliptisch ausgebildeten Abschnitte über höchstens 85% des Umfangs, bevorzugter über höchstens 80% des Umfangs, bevorzugter über höchstens 75% des Umfangs, bevorzugter über höchstens 75% des Umfangs, bevorzugter über höchstens 66% des Umfangs, bevorzugter über höchstens 60% des Umfangs und noch bevorzugter über höchstens 55% des Umfangs der jeweiligen Ellipse.

Besonders bevorzugt erstrecken sich die elliptisch ausgebildeten Abschnitte über 50% des Umfangs der jeweiligen Ellipse.

Vorzugsweise sind die elliptisch ausgebildeten Abschnitte der wellenlängen-selektiven Bereiche jeweils nahezu äquidistant zueinander beabstandet, d.h. das Verhältnis des Abstandes zwei benachbarter elliptisch ausgebildeter Abschnitte (eines wellenlängen-selektiven Bereichs) zum Abstand der jeweils angrenzenden benachbarten elliptisch ausgebildeten Abschnitte beträgt zwischen 0,9 und 1,1. Vorzugsweise sind sämtliche elliptisch ausgebildeten Abschnitte (eines wellenlängen-selektiven Bereichs) gleich ausgerichtet, d.h. kongruent zueinander angeordnet (bzw. sind die Tangenten an den jeweiligen Hauptscheitelpunkten parallel), wohingegen die elliptisch ausgebildeten Abschnitte unterschiedlicher (z.B. benachbarter) wellenlängen-selektiver Bereiche einen endlichen Winkel einschließen.

Die maximale Krümmung der elliptisch ausgebildeten Abschnitte beträgt vorzugsweise zwischen r=10 mm und r=40 mm. Die minimale Krümmung der elliptisch ausgebildeten Abschnitte beträgt vorzugsweise zwischen r=10 $\mu$m und r=1 mm.

Als Maß für die Krümmung eines Kreises dient die Größer $\frac{1}{r} = \frac{\Delta\varphi}{\Delta s}$, das Verhältnis von Zentriwinkel und Länge eines Kreisbogens. Der Zentriwinkel ist gleich dem Winkel zwischen den Tangenten an dem Kreis in den Endpunkten des Kreisbogens. Um die Krümmung einer beliebigen Kurve in einem Punkt zu definieren, betrachtet man entsprechend ein Kurvenstück der Länge Δs, das den fraglichen Punkt enthält und dessen Tangenten in den Endpunkten sich im Winkel Δφ schneiden. Vorzugsweise wird eine Vielzahl von reflektierenden (besonders bevorzugt elliptischen) wellenlängen-selektiven Bereichen (die besonders bevorzugt jeweils als Fresnel-Zonen-Platten ausgebildet sind) fächerförmig nebeneinander angeordnet, wobei sich eine zentrale Energie mindestens eines der wellenlängen-selektiven Bereiche (vorzugsweise einer Vielzahl dieser wellenlängen-selektiven Bereiche, besonders bevorzugt sämtlicher wellenlängen-selektiver Bereiche) nur geringfügig (kleiner 10%, bevorzugter kleiner 5%, bevorzugter kleiner 3%, noch bevorzugter kleiner 1% und noch bevorzugter kleiner 0,5%) von der zentralen Energie des jeweils benachbarten wellenlängen-selektiven Bereichs bzw. der benachbarten wellenlängen-selektiven Bereiche unterscheidet. Vorzugsweise unterscheidet sich eine zentrale Energie mindestens einer der wellenlängen-selektiven Bereiche (vorzugsweise einer Vielzahl dieser wellenlängen-selektiven Bereiche, besonders bevorzugt sämtlicher wellenlängen-selektiver Bereiche) von der zentralen Energie des jeweils benachbarten wellenlängen-selektiven Bereichs bzw. der benachbarten wellenlängen-selektiven Bereiche. Hierdurch kann der Messbereich für die zu untersuchenden Energien um mehr als das Zehnfache erhöht werden.

In einer alternativen bevorzugten Ausführungsvariante ist es vorgesehen, dass nicht sämtliche wellenlängen-selektiven Bereiche eine geringfügig unterschiedliche zentrale Energie aufweisen, sondern für mindestens einen Energiewert jeweils eine Vielzahl identischer wellenlängen-selektiver Bereiche separat nebeneinander angeordnet sind. Hierdurch kann die Apertur der Abbildung für diesen Energiewert weiter erhöht werden. Voraussetzung für die Bestimmung eines Spektrums ist jedoch, dass mindestens eine Vielzahl von wellenlängen-selektiven Bereichen mit unterschiedlichen zentralen Energien auf der reflektierenden Zonenplatte integriert sind, deren (benachbarte) zentrale Energien sich nur geringfügig unterscheiden.

Vorzugsweise grenzen benachbarte wellenlängen-selektive Bereiche direkt aneinander. Ein einhergehender Vorteil ist, dass auf einer reflektiven Zonenplatte eine große Anzahl wellenlängen-selektiver Bereiche vorgesehen werden kann, was zu einer besonders hohen spektralen Auflösung bzw. einem vergleichsweise breiteren Energiebereich führt.

Vorzugsweise weisen die bogenförmig ausgebildeten Abschnitte Stege mit einer planaren Oberseite auf, wobei zwischen den bogenförmig ausgebildeten Abschnitten jeweils Gräben vorgesehen sind. Dabei ist es besonders bevorzugt, dass die Zonenplatte einstückig ausgebildet ist. Die Gräben bilden dann (unter Berücksichtigung eines vorteilhaften Einstrahlwinkels) die nicht-reflektiven Bereiche aus, wohingegen die gegenüber den Gräben höher gelegenen Stege der Zonenplatte die reflektiven (bogenförmig ausgebildeten) Abschnitte ausbilden.

Vorzugsweise erhöht sich die Tiefe der Gräben zwischen benachbarten bogenförmig ausgebildeten Abschnitten (eines, vorzugsweise jeweils jedes wellenlängen-selektiven Bereichs) kontinuierlich in Richtung des Detektors. Ein einhergehender Vorteil ist, dass durch diese Ausgestaltung eine besonders hohe spektrale Auflösung bzw. eine besonders gute Fokussierung der Strahlung sämtlicher Wellenlängen in die jeweiligen Empfängerbereiche erfolgen kann.

Vorzugsweise verändert sich der Abstand benachbarter Abschnitte (eines, vorzugsweise jeweils jedes wellenlängen-selektiven Bereichs) entlang der Längserstreckung der Abschnitte von einem ersten Ende der benachbarten Abschnitte zu einem zweiten Ende der benachbarten Abschnitte entsprechend der Fresnel-Beziehung kontinuierlich.

Vorzugsweise verändert sich der Abstand benachbarter Abschnitte (eines, vorzugsweise jeweils jedes wellenlängen-selektiven Bereichs) entlang einer Achse senkrecht zur Längserstreckung der Abschnitte von einem dem Detektor abgewandten Ende der Zonenplatte zu einem dem Detektor zugewandten Ende der Zonenplatte entsprechend der Fresnel-Beziehung kontinuierlich.

Vorzugsweise weisen die reflektierenden Abschnitte (eines, vorzugsweise jeweils jedes wellenlängen-selektiven Bereichs) eine dem zu messenden Wellenlängenbereich sowie den geometrischen Dimensionen und Abständen von Quelle, Zonenplatte und Detektor entsprechende Krümmung auf.

Die bogenförmigen Abschnitte sämtlicher wellenlängen-selektiver Bereiche sind vorzugsweise derart ausgeformt, dass die elektromagnetischen Wellen der eingestrahlten polychromatischen Strahlung wellenlängenabhängig in eine Vielzahl von Detektorbereichen fokussiert werden, wobei die Detektorbereiche entlang einer Linie angeordnet sind.

Vorzugsweise ist die aktive Fläche des Detektors planar ausgebildet. Nach Bedarf kann der Detektor auch gekippt werden. Vorzugsweise ist die Vielzahl korrespondierender Empfängerbereiche auf dem Detektor entlang einer Linie angeordnet. Vorzugsweise schließt eine Verbindungslinie zwischen der Quelle und einem zentral auf der Zonenplatte angeordneten wellenlängen-selektiven Bereich mit einer Linie, auf der die Empfängerbereiche angeordnet sind, einen Winkel zwischen 70 und 110°, bevorzugter zwischen 80 und 100°, noch bevorzugter zwischen 85 und 95° und noch bevorzugter von 90° ein.

Vorzugsweise wird die Vorrichtung zur Bestimmung der energetischen Zusammensetzung von elektromagnetischen Wellen im Bereich von 10 bis 2000 eV, bevorzugter 150 bis 1000 eV verwendet.

Vorzugsweise sind die reflektierenden Strukturen durch Stege mit einer Höhe zwischen 1 nm und 100 nm, bevorzugter zwischen 5 nm und 40 nm ausgebildet und/oder die Breite der Strukturen liegt im Bereich zwischen 0,1 $\mu$m und 10 $\mu$m, bevorzugter zwischen 0,5 $\mu$m und 4 $\mu$m.

Vorzugsweise sind sämtliche Empfängerbereiche entlang einer parallel zur Oberfläche des Trägersubstrats verlaufenden Linie angeordnet.

Vorzugsweise weist die Vorrichtung Mittel zur Erfassung und Berechnung des Spektrums (energetische Verteilung) der Röntgenstrahlung der Quelle aus den simultan detektierten Intensitäten der mindestens zwei Empfängerbereiche auf.

In einer weiteren bevorzugten Ausführungsvariante der Erfindung ist mindestens eine weitere (zweite) reflektierende Zonenplatte vorgesehen, wobei die erste reflektierende Zonenplatte und die zweite reflektierende Zonenplatte derart zueinander angeordnet sind, dass die jeweils von den Zonenplatten reflektierte und gebeugte Röntgenstrahlung derart fokussiert wird, dass die jeweiligen Fokalpunkte oder Fokalbereiche auf einen gemeinsamen, ortsauflösenden Detektor (bezüglich unterschiedlicher Energien der Strahlung räumlich getrennt) treffen. Vorzugsweise sind die erste reflektierende Zonenplatte und die zweite reflektierende Zonenplatte parallel zueinander angeordnet (übereinander oder hintereinander). Vorzugsweise weist auch die zweite Zonenplatte ein Trägersubstrat mit einer planar ausgebildeten Oberseite sowie auf der Oberseite des Trägersubstrats angeordnete reflektierende Strukturen auf, wobei die Strukturen der ersten reflektierenden Zonenplatte und die Strukturen der zweiten reflektierenden Zonenplatte derart dimensioniert sind, dass jeweils eine Fokussierung unterschiedlicher Wellenlängen(bereiche) bzw. Energien der elektromagnetischen Strahlung auf den Detektor (bzw. entsprechende Detektoren) erfolgt.

Gemäß einem weiteren Aspekt der Erfindung wird eine reflektierende Zonenplatte zur Fokussierung und Selektion der Wellenlängen der elektromagnetischen Wellen offenbart, aufweisend: eine Vielzahl vordefinierter, nebeneinander angeordneter, wellenlängenselektiver Bereiche, wobei der ortsauflösende Detektor eine Vielzahl korrespondierender Empfängerbereiche aufweist, wobei die wellenlängen-selektiven Bereiche jeweils eine Vielzahl reflektierender, bogenförmig ausgebildeter Abschnitte umfassen, die sich ausschließlich und kontinuierlich über den jeweiligen wellenlängen-selektiven Bereich erstrecken.

Vorzugsweise ist die Vielzahl wellenlängen-selektiver Bereiche separat nebeneinander angeordnet.

Vorzugsweise grenzen benachbarte wellenlängen-selektive Bereiche direkt aneinander. Ein einhergehender Vorteil ist, dass auf einer reflektiven Zonenplatte eine große Anzahl wellenlängen-selektiver Bereiche vorgesehen werden kann, was zu einer besonders hohen spektralen Auflösung bzw. einem vergleichsweise breiteren Energiebereich führt.

Vorzugsweise weisen die bogenförmig ausgebildeten Abschnitte eine planare Oberseite auf, wobei zwischen den bogenförmig ausgebildeten Abschnitten jeweils Gräben vorgesehen sind. Dabei ist es besonders bevorzugt, dass die Zonenplatte einstückig ausgebildet ist. Die Gräben bilden dann (unter Berücksichtigung eines vorteilhaften Einstrahlwinkels) die nicht-reflektiven Bereiche aus, wohingegen die gegenüber den Gräben höher gelegenen Bereiche der Zonenplatte die reflektiven (bogenförmig ausgebildeten) Abschnitte ausbilden.

Vorzugsweise ändert (erhöht oder verringert) sich die Tiefe der Gräben (bzw. die Höhe der Stege) zwischen benachbarten bogenförmig ausgebildeten Abschnitten (eines, vorzugsweise jeweils jedes wellenlängen-selektiven Bereichs) kontinuierlich in eine erste Richtung, die sich senkrecht zur Längserstreckung der Abschnitten erstreckt. Ein einhergehender Vorteil ist, dass durch diese Ausgestaltung eine besonders hohe spektrale Auflösung bzw. eine besonders gute Fokussierung der Strahlung sämtlicher Wellenlängen in die jeweiligen Empfängerbereiche erfolgen kann.

Vorzugsweise verändert sich der Abstand benachbarter Abschnitte (eines, vorzugsweise jeweils jedes wellenlängen-selektiven Bereichs) entlang der Längserstreckung der Abschnitte von einem ersten Ende der benachbarten Abschnitte zu einem zweiten Ende der benachbarten Abschnitte entsprechend der Fresnel-Beziehung kontinuierlich.

Vorzugsweise verändert sich der Abstand benachbarter Abschnitte (eines, vorzugsweise jeweils jedes wellenlängen-selektiven Bereichs) entlang einer Achse senkrecht zur Längserstreckung der Abschnitte von einem ersten Ende der Zonenplatte zu einem zweiten Ende der Zonenplatte entsprechend der Fresnel-Beziehung kontinuierlich.

Vorzugsweise wird die zur Erzeugung eines Spektrums von elektromagnetischen Wellen im Bereich von 10 bis 2000 eV, bevorzugter 150 bis 1000 eV verwendet.

Gemäß einem weiteren Aspekt der Erfindung wird ein Verfahren zur Bestimmung der energetischen Zusammensetzung von elektromagnetischen Wellen, insbesondere von Röntgenstrahlung einer Quelle mit folgenden Verfahrensschritten offenbart:

- Einstrahlen der polychromatischen elektromagnetischen Strahlung der Quelle auf eine reflektierende Zonenplatte, wobei

- mindestens zwei verschiedene Wellenlängenbereiche der eingestrahlten Röntgenstrahlung jeweils durch vordefinierte, nebeneinander angeordnete, wellenlängen-selektive Bereiche der reflektierenden Zonenplatte reflektiert und gebeugt und in jeweils vordefinierte, voneinander getrennte, in einer Ebene liegende Empfängerbereiche fokussiert werden, und

- Detektion der von der Zonenplatte reflektierten und gebeugten Röntgenstrahlung in den mindestens zwei Empfängerbereichen,

wobei die reflektierte und/oder gebeugte elektromagnetische Strahlung unterschiedlicher Wellenlängen mittels einer Vielzahl separater wellenlängen-selektiver Bereiche, die jeweils eine Vielzahl reflektierender, bogenförmig ausgebildeter Abschnitte umfassen, die sich ausschließlich und kontinuierlich über den jeweiligen wellenlängen-selektiven Bereich erstrecken, jeweils in unterschiedliche Fokalpunkte oder Fokalbereiche derart fokussiert wird, dass die jeweiligen Fokalpunkte oder Fokalbereiche in der Ebene der Empfängerbereiche entlang einer Linie angeordnet sind, und die Längsachse der durch die jeweiligen Fokalpunkte oder Fokalbereiche gebildeten Linie senkrecht oder im Wesentlichen senkrecht zur Beugungsrichtung der wellenlängen-selektiven Bereiche angeordnet ist, und aus den simultan detektierten Intensitäten der mindestens zwei Empfängerbereiche die energetische Zusammensetzung der elektromagnetischen Strahlung der Quelle bestimmt wird.

Als Quelle im Sinne der Erfindung kann eine Primärquelle von elektromagnetischer Strahlung (vorzugsweise Röntgenstrahlung), aber auch eine Probe verstanden werden, welche elektromagnetische Strahlung emittiert, reflektiert und/oder absorbiert (beispielsweise bei der Absorptionsspektroskopie).

Erfindungsgemäß wird die elektromagnetische Strahlung in Abhängigkeit ihrer Wellenlänge (Energie) mittels der reflektierenden (Fresnelschen) Zonenplatte in eine Vielzahl von nebeneinander angeordneten Bereichen fokussiert, so dass die unterschiedlichen Energien auf unterschiedliche Stellen eines ortsauflösenden Detektors treffen (der auch aus mehreren Detektoren aufgebaut sein kann) und aus den Messwerten des ortsauflösenden Detektors (bzw. der einzelnen Detektoren) auf das Spektrum bzw. die energetische Verteilung geschlossen werden kann.

Vorzugsweise wird die von der Quelle stammende, polychromatische Röntgenstrahlung unter einem Winkel zwischen 0.05° und 5°, bevorzugter zwischen 1° und 3° auf die reflektierende Zonenplatte eingestrahlt. Vorzugsweise wird die reflektierende Zonenplatte von der Quelle in einem Abstand zwischen 5 mm und 50 mm angeordnet und/oder die Empfängerbereiche von der reflektierenden Zonenplatte in vergleichbaren Abständen angeordnet. Die Abstände hängen von der angestrebten Energieauflösung und der Größe des Detektors ab. Entsprechend kann die Fresnel-Struktur berechnet werden.

Gemäß der Erfindung wird die reflektierte und/oder gebeugte Röntgenstrahlung unterschiedlicher Wellenlänge mittels der wellenlängen-selektiven Bereiche jeweils in unterschiedliche Fokalpunkte oder Fokalbereiche derart fokussiert, dass die jeweiligen Fokalpunkte oder Fokalbereiche in der Ebene der Empfängerbereiche entlang einer Linie angeordnet sind, wobei die Längsachse der durch die jeweiligen Fokalpunkte oder Fokalbereiche gebildeten Linie senkrecht oder im Wesentlichen senkrecht zur Beugungsrichtung der wellenlängen-selektiven Bereiche angeordnet ist. Im Falle von Fokalbereichen wird die Linie durch die geometrischen Mittelpunkte der Fokalbereiche bestimmt.

Vorzugsweise wird die Fokussierung der eingestrahlten Röntgenstrahlung in voneinander getrennte Fokalpunkte oder Fokalbereiche in Abhängigkeit der Wellenlänge der Röntgenstrahlung mittels einer Vielzahl von reflektierenden Abschnitten (die als bogenförmige Abschnitte mit vorzugsweise linienförmigen Rändern ausgebildet sind, deren Krümmung sich kontinuierlich verändert) realisiert. Vorzugsweise werden die wellenlängen-selektiven Bereiche in Bezug auf die Ausbreitungsrichtung der Röntgenstrahlung nebeneinander auf der Zonenplatte angeordnet.

Vorzugsweise wird die von der Quelle stammende, polychromatische Röntgenstrahlung auf eine erste reflektierende Zonenplatte und mindestens eine zweite reflektierende Zonenplatte eingestrahlt, und die von den Zonenplatten reflektierte und gebeugte Röntgenstrahlung in den mindestens zwei Empfängerbereichen detektiert. Dadurch ist es möglich, mit jeder Zonenplatte einen gesonderten Energiebereich sehr hoch aufzulösen und simultan zu messen, diese Energiebereiche können aneinander anschließen oder sich überlagern. Vorzugsweise werden die erste reflektierende Zonenplatte und die zweite reflektierende Zonenplatte derart zueinander positioniert, dass die jeweils von den Zonenplatten reflektierte und gebeugte Röntgenstrahlung derart fokussiert wird, dass die jeweiligen Fokalpunkte oder Fokalbereiche auf einen gemeinsamen, ortsauflösenden Detektor treffen.

Für den Nachweis von Spurenelementen bietet sich die parallele Anordnung gleicher Strukturen an, um den Aperturwinkel und damit die Lichtstärke des Spektrometers zu erhöhen.

Gemäß einem weiteren Aspekt der Erfindung ist die Vorrichtung dadurch gekennzeichnet, dass diese in Kombination mit einem Zeilen- oder Flächendetektor in einem Rasterelektronenmikroskop eingesetzt wird.

Gemäß einem weiteren Aspekt der Erfindung ist die Vorrichtung dadurch gekennzeichnet, dass diese in Kombination mit einem Zeilen- oder Flächendetektor in einem Transmissionselektronenmikroskop als wellenlängendispersives Röntgenspektrometer eingesetzt wird.

Gemäß einem weiteren Aspekt der Erfindung ist die Vorrichtung dadurch gekennzeichnet, dass diese in Kombination mit einem Zeilen- oder Flächendetektor an einer Synchrotron-Beamline eingesetzt wird.

Gemäß einem weiteren Aspekt der Erfindung ist die Vorrichtung dadurch gekennzeichnet, dass diese in Kombination mit einem Zeilen- oder Flächendetektor an einer sogenannten "Particle induced x-ray emission"-Emissionsanlage (auch als PIXE-Emissionsanlage bezeichnet) als wellenlängendispersives Röntgenspektrometer eingesetzt wird.

*Kurzbeschreibung der Zeichnungen*

Die Erfindung soll nachstehend anhand von Ausführungsbeispielen näher erläutert werden. Es zeigen:

Figur 1a: eine erfindungsgemäße Vorrichtung zur Röntgenspektroskopie gemäß einer ersten Ausführungsvariante in schematischer, perspektivischer Darstellung mit einer Zonenplatte, die ein Trägersubstrat mit einer ebenen Oberfläche aufweist,

Figur 1b: eine erfindungsgemäße Vorrichtung zur Röntgenspektroskopie gemäß einer zweiten Ausführungsvariante in schematischer, perspektivischer Darstellung mit einer Zonenplatte, die ein Trägersubstrat mit einer gekrümmten Oberfläche aufweist,

Figur 2a: eine detaillierte, schematische Darstellung der erfindungsgemäßen Vorrichtung gemäß Figur 1a in schematischer Aufsicht,

Figur 2b: eine detaillierte, schematische Darstellung einer erfindungsgemäßen Vorrichtung gemäß einer weiteren bevorzugten Ausführungsvariante in schematischer Aufsicht,

Figur 3: die in der erfindungsgemäßen Vorrichtung verwendete reflektierende Zonenplatte in schematischer, geschnittener Darstellung,

Figur 4: eine alternative Ausführungsvariante einer in der erfindungsgemäßen Vorrichtung verwendeten reflektierenden Zonenplatte mit Blaze-Anordnung in schematischer, geschnittener Darstellung,

Figur 5: die Verwendung der erfindungsgemäßen Vorrichtung zur Röntgenfluoreszenz-Spektroskopie im Rasterelektronenmikroskop,

Figur 6: die Verwendung der erfindungsgemäßen Vorrichtung zur breitbandigen simultanen Charakterisierung von kurzzeitigen Plasmaquellen,

Figur 7: die Verwendung der erfindungsgemäßen Vorrichtung zur ortsabhängigen und hochaufgelösten Messung von Röntgenabsorptionsspektren,

Figur 8: eine erfindungsgemäße Vorrichtung nach einer weiteren Ausführungsvariante der vorliegenden Erfindung mit zwei übereinander angeordneten reflektierenden Zonenplatten,

Figur 9: eine erfindungsgemäße Vorrichtung nach einer alternativen Ausführungsvariante der vorliegenden Erfindung mit zwei nebeneinander angeordneten reflektierenden Zonenplatten, und

Figur 10: eine erfindungsgemäße Vorrichtung nach einer alternativen Ausführungsvariante der vorliegenden Erfindung mit zwei sich gegenüber liegenden reflektierenden Zonenplatten.

*Ausführliche Beschreibung der Zeichnungen*

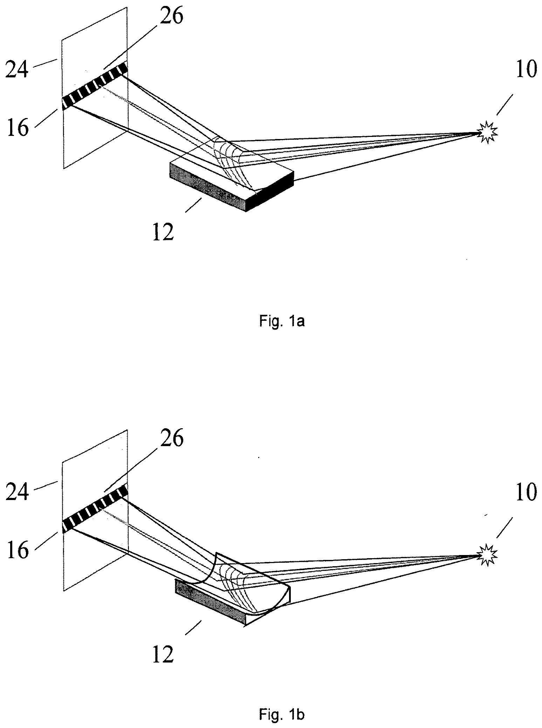

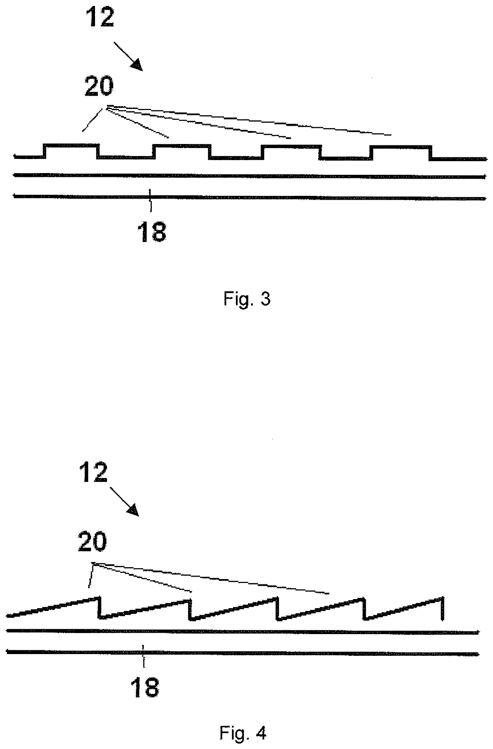

Figur 1a zeigt eine bevorzugte Ausführungsvariante der erfindungsgemäßen Vorrichtung in schematischer, perspektivischer Darstellung. Zur Bestimmung der energetischen Zusammensetzung von elektromagnetischer Strahlung (bevorzugt Röntgenstrahlung) der Röntgenstrahlungsquelle 10 wird die von dieser Strahlungsquelle 10 stammende Röntgenstrahlung erfindungsgemäß auf die reflektierende Zonenplatte 12 gestrahlt, wobei die reflektierende Zonenplatte 12 derart ausgebildet ist, dass Röntgenstrahlung eines bestimmten Wellenlängenbereiches in einen vordefinierten Detektorbereich des ortsauflösenden Detektors 16 fokussiert wird. Gemäß dem Ausführungsbeispiel nach Figur 1a ist die Oberfläche der Zonenplatte 12 eben (planar) ausgebildet. Diese Planarität bezieht sich jedoch nicht auf die reflektierenden Linien bzw. Stege 20 (siehe Figur 3 und 4), sondern auf die Oberfläche des Trägersubstrats 18 der Zonenplatte 12. In einer alternativen Ausgestaltung (Figur 1b) ist es vorgesehen, dass die Oberfläche des Trägersubstrats 18 der Zonenplatte 12 zur Innenseite gekrümmt (konkav) ausgebildet ist. Durch die Verwendung einer gekrümmten Zonenplatte 12 kann eine höhere Lichtstärke im Detektor 16 erzielt werden; jedoch ist die Herstellung einer solchen gekrümmten Zonenplatte 12 (Figur 1b) technologisch deutlich aufwendiger als bei einer Zonenplatte mit einem planaren Trägersubstrat. Die Krümmung der Zonenplatte 12 ist den jeweiligen geometrischen Bedingungen (d.h. dem Abstand der Röntgenquelle 10 zur Zonenplatte 12 bzw. zu den einzelnen Bereichen 14 sowie dem Abstand der Bereiche 14 von den Detektorbereichen 22 sowie den entsprechenden Winkeln) derart angepasst, dass in den Detektorbereichen 22 eine maximale Lichtstärke erzielt wird.

Der Detektor 16 verfügt über eine Schlitzblende 26, die sich in der Fokalebene der Zonenplatte 12 vor dem Detektor 16 befindet und gestreutes, nicht fokussiertes Licht von der Detektion abhält. Eine Alternative zur Verwendung einer Schlitzblende 26 besteht darin, dass nur der Fokalbereich aus dem Detektor 16 ausgelesen wird, dann wäre die Schlitzblende 26 nicht erforderlich. Da es sich in den Figuren 1a und 1b lediglich um eine schematische Darstellung handelt, sind die reflektierenden Bereiche aus Gründen der Veranschaulichung über die Zonenplatte 12 kontinuierlich dargestellt, obwohl diese erfindungsgemäß lediglich in den jeweiligen separaten wellenlängen-selektiven Bereichen 14 kontinuierlich verlaufen und tatsächlich zwischen benachbarten wellenlängen-selektiven Bereichen 14 diskontinuierlich ausgebildet sind (Figuren 2a und 2b).

Die Zonenplatte 12 ist erfindungsgemäß derart konzipiert, dass unterschiedliche Wellenlängen in unterschiedliche Detektorbereiche 22 (Figur 2a) fokussiert werden. Hierdurch kann das erfindungsgemäße wellenlängendispersive System eine simultane Registrierung der aufgespalteten Röntgenstrahlung über einen großen Energiebereich realisieren. Als Detektoren können beispielsweise lineare Arrays von Fotodioden, CCD oder auch ortsauflösende Proportionalzähler verwendet werden. Um eine Dispersion der Strahlung entlang des Detektors 16 in die einzelnen Detektorbereiche 22 (siehe Figur 2a) zu erreichen, ist es erforderlich, dass jeder Bereich 14 der Zonenplatte 12 für eine andere Energie entworfen ist, so dass eine kontinuierliche Abbildung des Spektrums erfolgen kann. Das Detektorsystem ist an die Energieauflösung, aber auch den detektierenden Energiebereich anzupassen. Im Ausführungsbeispiel wird ein Energiebereich von 500 eV (beispielsweise zwischen 500 und 1000 eV) mit einer Auflösung von etwa 10 eV erreicht (bei einem Detektor mit 100 Kanälen). Die Zonenplatte 12 ist dazu den jeweiligen geometrischen Bedingungen, d.h. dem Abstand der Röntgenquelle 10 zur Zonenplatte 12 bzw. zu den einzelnen Bereichen 14 sowie dem Abstand der Bereiche 14 von den Detektorbereichen 22 sowie den entsprechenden Winkeln anzupassen. Gemäß der Ausführungsvariante der Figur 2a sind die Hauptscheitel jeweils vom Detektor 22 weg gerichtet. Gemäß der alternativen Ausführungsvariante der Figur 2b sind die Hauptscheitel jeweils zum Detektor hin gerichtet.

Im Gegensatz zu der in DE 10 2007 048 743 B4 offenbarten Zonenplatte, in der sich die reflektiven Abschnitte (Stege) kontinuierlich über sämtliche wellenlängen-selektive Bereiche 14 erstrecken, erstrecken sich die reflektierenden, bogenförmig ausgebildeten Abschnitte 20 gemäß der vorliegenden Erfindung zwar auch kontinuierlich, aber lediglich (ausschließlich) über den jeweiligen wellenlängen-selektiven Bereich. Mit anderen Worten gehen bogenförmige Abschnitte 20 eines wellenlängen-selektiven Bereichs 14 nicht kontinuierlich in einen bogenförmigen Abschnitt 20 eines benachbarten wellenlängen-selektiven Bereichs 14 über. Hierdurch kann eine höhere spektrale Auflösung erreicht werden, weil die Fokusse in der Detektorebene besser fokussiert werden können. Während die in DE 10 2007 048 743 B4 offenbarte Zonenplatte eine Fokussierung der Strahlung in eine Richtung (quer zur Ausbreitungsrichtung) erlaubt, können die separaten bogenförmigen Abschnitte 20 unterschiedlicher Bereiche 14 eine Fokussierung der Strahlung in zwei Richtungen ermöglichen.

Zur Erweiterung des Messbereiches für die zu untersuchenden Energien werden anstelle einer wie in DE 195 42 679 A1 verwendeten achsenfernen Zonenplatte, eine Vielzahl von reflektierenden elliptischen Fresnel-Zonen-Platten fächerförmig nebeneinander angeordnet, wobei sich die zentrale Energie mindestens einer der Zonenplatten (vorzugsweise einer Vielzahl der Zonenplatten, besonders bevorzugt sämtlicher Zonenplatten) nur geringfügig (kleiner 10%, bevorzugter kleiner 5%, bevorzugter kleiner 3%, noch bevorzugter kleiner 1 % und noch bevorzugter kleiner 0,5%) von der zentralen Energie der jeweils (mindestens einen, ggf. der zwei) benachbarten Zonenplatte unterscheidet. Auf diesem Wege erlaubt eine künstlich in einer Ebene erzeugte Wellendispersion, die senkrecht zur Diffraktionsebene liegt, den Messbereich für die zu untersuchenden Energien um mehr als das Zehnfache zu erhöhen. Dabei bleibt die Möglichkeit der Nutzung der Dispersion in der

Diffraktionsebene zur Erzielung einer hohen Energieauflösung erhalten.

In den Figuren 3 und 4 ist die schematische Darstellung eines Querschnitts der verwendeten Zonenplatte 12 dargestellt. Die reflektierende Zonenplatte 12 kann aus einem Substrat 18 (beispielsweise ein superpolierter Si-Wafer 18 mit metallisch-reflektierenden Strukturen 20, z. B. aus Gold oder Silber) bestehen. Die entsprechenden Strukturen 20 auf der Oberfläche können beispielsweise durch Ätzen und/oder Bedampfen auf der Oberfläche 18 abgebildet werden. Wie aus Figur 1a und Figur 1b ersichtlich, ist es besonders bevorzugt, dass die reflektierenden Strukturen 20 für die unterschiedlichen Bereiche 14 (Figur 2a) kontinuierlich ineinander übergehen, so dass entlang der Linie des Detektors 16 ein kontinuierliches Spektrum der Röntgenstrahlung der Quelle 10 gemessen werden kann. Die Energieauflösung wird dann durch die Anzahl der Kanäle des Detektors 16 entlang der durch die Fokalpunkte gebildeten Linien (auch für die einzelnen Wellenlängen) sowie die Präzision der Strukturen bestimmt. Im Ausführungsbeispiel wurde beispielsweise ein Detektor 16 mit einer Länge von 25 mm und einer Auflösung von 1024 Kanälen verwendet. Die gemessenen Signale der einzelnen Kanäle können über entsprechende Nachweiseffektivitätskurven korrigiert werden. Die erfindungsgemäße Vorrichtung soll insbesondere zur Detektion von niederenergetischer Röntgenstrahlung bis 4 keV verwendet werden. Figur 4 zeigt eine Blaze-Struktur, die ebenfalls für die Erzeugung der Phasenunterschiede eingesetzt werden kann.

Die Abbildung des Spektrums kann durch eine derartige erfindungsgemäße Anordnung sowohl im Maßstab 1:1, aber auch vergrößernd oder verkleinernd erfolgen. Damit ergeben sich Möglichkeiten für die Anpassung der Energieauflösung und Geometrie an die jeweiligen Applikationen, so dass stets Detektoren mit vordefinierten Größen (Pixelgröße und -anzahl) verwendet werden können.

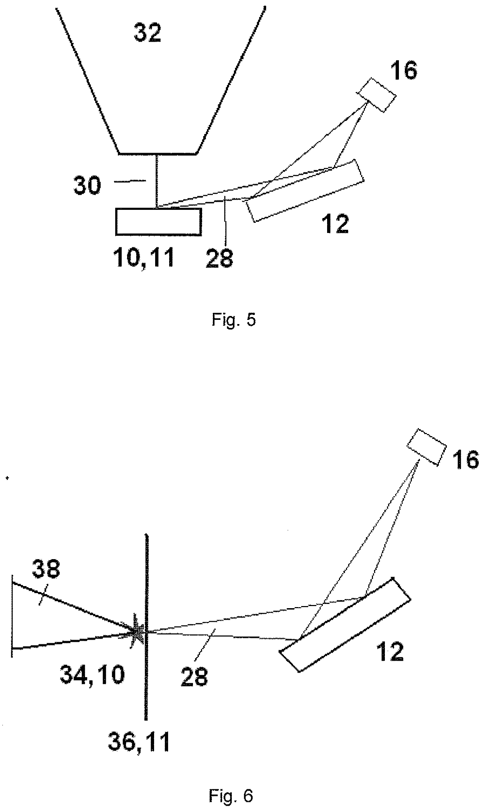

Figur 5 zeigt die Verwendung der erfindungsgemäßen Vorrichtung zur Röntgenfluoreszenz-Spektroskopie in einem Elektronenmikroskop. Durch den Elektronenstrahl 30 eines Elektronenmikroskops (das Bezugszeichen 32 bezieht sich hier auf den Polschuh des Elektronenmikroskops) wird die Probe 11 zur Fluoreszenz und damit zur Emission von Röntgenstrahlung angeregt und stellt somit die Quelle 10 für die Röntgenspektroskopie dar. Die von der Probe 11 emittierte, polychromatische Röntgenstrahlung 28 wird nun durch die reflektierende Zonenplatte 12 auf den Detektor 16 abgebildet, wobei die Röntgenstrahlung analog Figur 1a (und Figur 1b) in Abhängigkeit ihrer Energie in unterschiedliche Bereiche 22 des Detektors 16 fokussiert und somit getrennt detektiert werden kann, wodurch das Spektrum der von der Probe 11 emittierten Röntgenstrahlung simultan ermittelt werden kann. Die Anregung der Fluoreszenz kann auch mit Protonen, $\alpha$-Teilchen oder Ionen erfolgen.

Figur 6 zeigt die Verwendung der erfindungsgemäßen Vorrichtung zur breitbandigen simultanen Charakterisierung von Plasmaquellen. Dabei wird die Strahlung 38 eines Pump-Lasers (Anregungsstrahlung) auf ein Target-Material 36 fokussiert, wodurch ein Plasma 34 angeregt wird, welches als Quelle 10 der Röntgenstrahlung dient. Die vom Plasma 34 emittierte Röntgenstrahlung 28 wird nun wieder über die reflektierende Zonenplatte 12 auf den Detektor 16 geleitet und dabei in Abhängigkeit der Wellenlänge in unterschiedliche Bereiche 22 des Detektors 16 (ortsauflösend) fokussiert (analog Figuren 1a, 1b, 2a und 2b), so dass hierdurch die energetische Zusammensetzung der polychromatischen Röntgenstrahlung 28 des Plasmas 34 bestimmt werden kann.

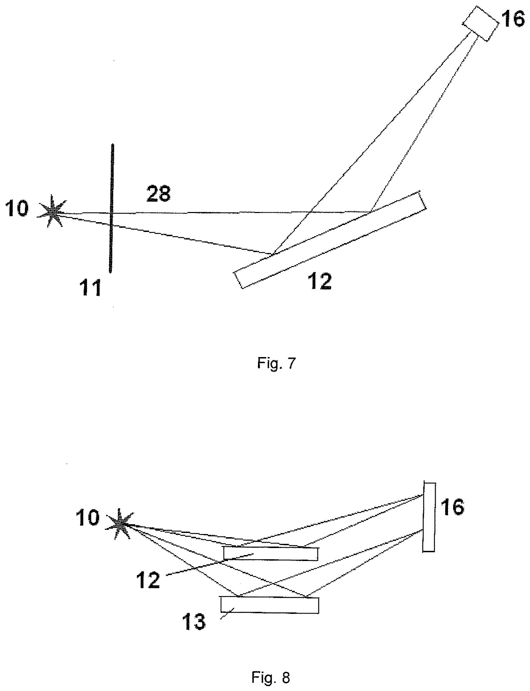

In Figur 7 ist die Verwendung der erfindungsgemäßen Vorrichtung zur hochauflösenden Absorptionsspektroskopie von Röntgenstrahlung schematisch dargestellt. Die Röntgenstrahlung einer Röntgenquelle 10 wird in Transmission auf eine Probe 11 eingestrahlt, wobei die von der Röntgenstrahlungsquelle 10 emittierte Röntgenstrahlung teilweise durch die Probe 11 absorbiert wird, wodurch aus dem detektierten Spektrum Rückschlüsse auf die Probe 11 gezogen werden können. Die durch die Probe 11 modifizierte Röntgenstrahlung 28 wird nun wiederum über die reflektierende Zonenplatte 12 auf den ortsauflösenden Detektor 16 geleitet und dabei entsprechend der Wellenlänge in unterschiedlichen Bereichen fokussiert (analog Figuren 1a, 1b, 2a und 2b), so dass hierdurch das Absorptionsspektrum der Probe 11 bestimmt werden kann.

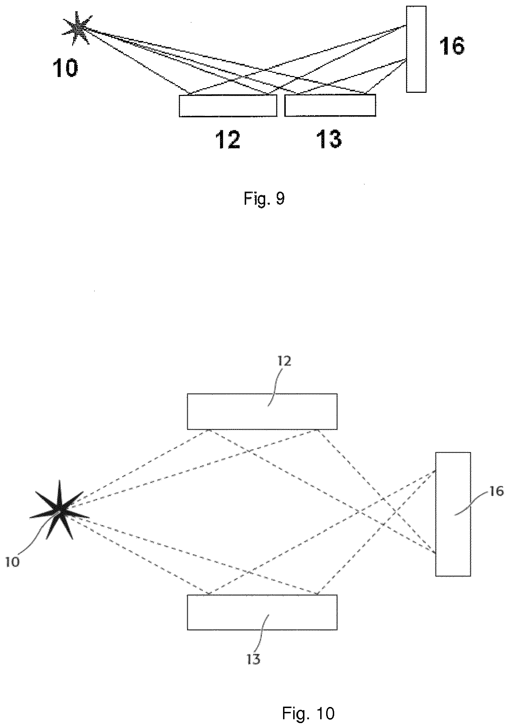

Figuren 8 und 9 zeigen jeweils eine weitere bevorzugte Ausgestaltung der Erfindung, wobei eine erste reflektierende Zonenplatte 12 und eine zweite reflektierende Zonenplatte 13, welche für unterschiedliche Energiebereiche ausgelegt sind, derart angeordnet werden, dass die Röntgenstrahlung der Quelle 10 sowohl über die erste reflektierende Zonenplatte 12 als auch über die zweite reflektierende Zonenplatte 13 auf einen Detektor 16 bzw. eine Vielzahl von Detektoren geleitet wird. Dabei sind die reflektierenden Zonenplatten 12 und 13 für unterschiedliche, sich vorzugsweise nicht überlappende Energiebereiche ausgelegt, d.h., dass die reflektierende Zonenplatte 12 Röntgenstrahlung auf den Detektor 16 fokussiert, die sich in ihrer Wellenlänge von der Röntgenstrahlung unterscheidet, die durch die reflektierende Zonenplatte 13 auf den Detektor 16 fokussiert wird. Mit dieser bevorzugten Ausführungsvariante ist es möglich, besonders große Energiebereiche simultan zu detektieren.

Wie in Figur 8 und 9 dargestellt, sind die beiden Zonenplatten 12, 13 beispielsweise übereinander oder nebeneinander angeordnet.

Figur 10 zeigt eine Anordnung von gegenüberliegenden Zonenplatten 12, 13, die unterschiedlich oder gleich konfiguriert sind. Im ersten Fall können ebenfalls verschiedene Energiebereiche erfasst werden oder auf der zweiten Zonenplatte 13 eine größere Apertur für ausgewählte Energien realisiert werden. Im zweiten Fall könnte man die jeweils zu einer Energie gehörigen Intensitäten in den beiden aktivierten Pixeln addieren und somit die Signalstärke erhöhen.

**Bezugszeichenliste**

10    Quelle
12    Zonenplatte
14    wellenlängen-selektiver Bereich
16    ortsauflösender Detektor
20    reflektierender, bogenförmig ausgebildeter Abschnitt
22    Empfängerbereiche des Detektors
26    Schlitzblende
28    Verbindungslinie zwischen Quelle und Detektor

**Patentansprüche**

1. Vorrichtung zur Bestimmung eines Spektrums von elektromagnetischen Wellen einer Quelle (10) aufweisend:

   mindestens eine reflektierende Zonenplatte (12) und mindestens einen ortsauflösenden Detektor (16), wobei die reflektierende Zonenplatte (12) eine Vielzahl vordefinierter, nebeneinander angeordneter, wellenlängen-selektiver Bereiche (14) und der ortsauflösende Detektor (16) eine Vielzahl korrespondierender Empfängerbereiche (22) aufweist,
   wobei die wellenlängen-selektiven Bereiche (14) jeweils eine Vielzahl reflektierender, bogenförmig ausgebildeter Abschnitte (20) umfassen, die sich ausschließlich über den jeweiligen wellenlängen-selektiven Bereich (14) erstrecken,
   **dadurch gekennzeichnet, dass**
   die bogenförmig ausgebildeten Abschnitte (20) jeweils einen Teil einer Ellipse ausbilden, wobei sich die bogenförmig ausgebildeten Abschnitte (20) über mindestens 10% des Umfangs der jeweiligen Ellipse erstrecken und wobei die bogenförmig ausgebildeten Abschnitte (20) zwischen benachbarten wellenlängen-selektiven Bereichen (14) diskontinuierlich ausgebildet sind.

2. Vorrichtung nach Anspruch 1, wobei die Vielzahl wellenlängen-selektiver Bereiche (14) separat nebeneinander angeordnet ist.

3. Vorrichtung nach einem der vorhergehenden Ansprüche, wobei eine Vielzahl gleicher wellenlängen-selektiver Bereiche (14) separat nebeneinander angeordnet ist.

4. Vorrichtung nach einem der vorhergehenden Ansprüche, wobei sich eine zentrale Energie mindestens eines der wellenlängen-selektiven Bereiche (14) um weniger als 10% von einer zentralen Energie des benachbarten wellenlängen-selektiven Bereichs (14) unterscheidet.

5. Vorrichtung nach Anspruch 4, wobei sich eine zentrale Energie einer Vielzahl wellenlängen-selektiver Bereiche (14) um weniger als 1% von einer zentralen Energie des jeweils benachbarten wellenlängen-selektiven Bereichs (14) unterscheidet.

6. Vorrichtung nach Anspruch 5, wobei sich eine zentrale Energie jedes der wellenlängen-selektiven Bereiche (14) um weniger als 1% von einer zentralen Energie des jeweils benachbarten wellenlängen-selektiven Bereichs (14) unterscheidet.

7. Vorrichtung nach einem der vorhergehenden Ansprüche, wobei benachbarte wellenlängen-selektive Bereiche (14) aneinander angrenzen.

8. Vorrichtung nach einem der vorhergehenden Ansprüche, wobei die bogenförmig ausgebildeten Abschnitte (20) eine planare Oberseite aufweisen, wobei zwischen den bogenförmig ausgebildeten Abschnitten (20) jeweils Gräben vorgesehen sind.

9. Vorrichtung nach Anspruch 8, wobei sich die Tiefe der Gräben zwischen benachbarten bogenförmig ausgebildeten Abschnitten (20) kontinuierlich in Richtung des Detektors (16) erhöht.

10. Vorrichtung nach einem der vorhergehenden Ansprüche, wobei sich der Abstand benachbarter Abschnitte (20) entlang der Längserstreckung der Abschnitte (20) von einem ersten Ende der benachbarten Abschnitte (20) zu einem zweiten Ende der benachbarten Abschnitte (20) entsprechend der Fresnel-Beziehung kontinuierlich verändert.

11. Vorrichtung nach einem der vorhergehenden Ansprüche, wobei sich der Abstand benachbarter Abschnitte (20) entlang einer Achse (26) senkrecht zur Längserstreckung der Abschnitte (20) von einem dem Detektor (16) abgewandten Ende der Zonenplatte (12) zu einem dem Detektor (16) zugewandten Ende der Zonenplatte (12) entsprechend der Fresnel-Beziehung kontinuierlich verändert.

12. Vorrichtung nach einem der vorhergehenden Ansprüche, wobei die reflektierenden Abschnitte (20) eine dem zu messenden Wellenlängenbereich sowie den geometrischen Dimensionen und Abständen von Quelle (10), Zonenplatte (12) und Detektor (16) entsprechende Krümmung aufweisen.

13. Vorrichtung nach einem der vorhergehenden Ansprüche, wobei der Detektor (16) planar ausgebildet ist, und/oder die Vielzahl korrespondierender Empfängerbereiche (22) entlang einer Linie angeordnet sind.

14. Verwendung einer Vorrichtung nach einem der vorhergehenden Ansprüche in Kombination mit einen Zeilen- oder Flächendetektor in einem Rasterelektronenmikroskop oder in einem Transmissionselektronenmikroskop als wellenlängendispersives Röntgenspektrometer.

15. Verwendung einer Vorrichtung nach einem der Ansprüche 1 bis 13 in Kombination mit einen Zeilen- oder Flächendetektor an einer Synchrotron-Beamline oder an einer Particle/Proton-Induced X-ray-Emissions-Anlage als wellenlängendispersives Röntgenspektrometer.

**Claims**

1. Device for determining a spectrum of electromagnetic waves of a source (10), featuring:

    At least one reflective zone plate (12) and at least one position-resolving detector (16), wherein the reflective zone plate (12) features a plurality of pre-defined, wavelength-selective areas (14) positioned adjacent to each other, and the position-resolving detector (16) features a plurality of corresponding receiver areas (22), wherein the wavelength-selective areas (14) respectively comprise a plurality of reflective, curved sections (20), which extend only over the respective wavelength-selective area (14), **characterized in that** the curved sections (20) respectively form a part of an ellipsis, wherein the curved sections (20) extend over at least 10% of the circumference of the respective ellipsis and wherein the curved sections (20) are discontinuous between adjacent wavelength-selective areas (14).

2. The device according to Claim 1, wherein the plurality of wavelength-selective areas (14) are arranged separately adjacent to each other.

3. The device according to any one of the preceding claims, wherein a plurality of the same wavelength-selective areas (14) are arranged separately adjacent to each other.

4. The device according to any one of the preceding claims, wherein a central energy of at least one of the wavelength-selective areas (14) differs from a central energy of the adjacent wavelength-selective area (14) by less than 10%.

5. The device according to Claim 4, wherein a central energy of a plurality of wavelength-selective areas (14) differs from a central energy of the respective adjacent wavelength-selective area (14) by less than 1%.

6. The device according to Claim 5, wherein a central energy of each of the wavelength-selective areas (14) differs from a central energy of the respective adjacent wavelength-selective area (14) by less than 1%.

7. The device according to any one of the preceding claims, wherein adjacent wavelength-selective areas (14) are adjacent to each other.

8. The device according to any one of the preceding claims, wherein the curved sections (20) feature a planar upper side, wherein between the curved sections (20), troughs are provided respectively.

9. The device according to Claim 8, wherein the depth of the troughs between adjacent curved sections (20) increases continuously in the direction of the detector (16).

10. The device according to any one of the preceding claims, wherein the distance between adjacent sections (20) along the longitudinal extension of the sections (20) and a first end of the adjacent sections (20) to a second end of the adjacent sections (20) changes continuously according to the Fresnel relationship.

11. The device according to any one of the preceding claims, wherein the distance between adjacent sections (20) along an axis (26) vertical to the longitudinal extension of the sections (20) from an end of the zone plate (12) that faces away from the detector (16) changes continuously in accordance with the Fresnel relationship.

12. The device according to any one of the preceding claims, wherein the reflective sections (20) feature a curve in accordance with the wavelength area to be measured and the geometric dimensions and distances from the source (10), zone plate (12) and detector (16).

13. The device according to any one of the preceding claims, wherein the detector (16) is planar and/or the plurality of corresponding receiver areas (22) are arranged along a line.

14. The use of a device according to any one of the preceding claims in combination with a line or surface detector in a scanning electron microscope or in a transmission electron microscope as a wavelength-dispersive X-ray spectrometer.

15. The use of a device according to any one of Claims 1 to 13 in combination with a line or surface detector on a synchrotron beamline or on a particle/proton-induced X-ray emission system as a wavelength-dispersive X-ray spectrometer.

**Revendications**

1. Dispositif pour la détermination d'un spectre d'ondes électromagnétiques d'une source (10), présentant :

au moins une plaque zonée réfléchissante (12) et au moins un détecteur à résolution spatiale (16), la plaque zonée réfléchissante (12) présentant une multiplicité de zones prédéfinies à sélection de longueurs d'ondes (14) disposées les unes à côté des autres, et le détecteur à résolution spatiale (16) présentant une multiplicité de zones de réception (22) correspondantes, les zones à sélection de longueurs d'ondes (14) comprenant respectivement une multiplicité de sections réfléchissantes réalisées en forme d'arc (20), lesquelles s'étendent exclusivement sur la zone à sélection de longueurs d'ondes (14) respective.
**caractérisé en ce que**
les sections réalisées en forme d'arc (20) forment respectivement une partie d'une ellipse, les sections réalisées en forme d'arc (20) s'étendant sur au moins 10 % de l'étendue de l'ellipse respective, et les sections réalisées en forme d'arc (20) étant réalisées de façon discontinue entre les zones à sélection de longueurs d'ondes (14) voisines.

2. Dispositif selon la revendication 1, la multiplicité des zones à sélection de longueurs d'ondes (14) étant disposées séparément les unes à côté des autres.

3. Dispositif selon l'une quelconque des revendications précédentes, une multiplicité de zones à sélection de longueurs d'ondes égales (14) étant disposées séparément les unes à côté des autres.

4. Dispositif selon l'une quelconque des revendications précédentes, une énergie centrale d'au moins une des zones à sélection de longueurs d'ondes (14) différant de moins de 10 % d'une énergie centrale de la zone à sélection de longueurs d'ondes (14) voisine.

5. Dispositif selon la revendication 4, une énergie centrale d'une multiplicité de zones à sélection de longueurs d'ondes (14) différant de moins de 1 % d'une énergie centrale de la zone à sélection de longueurs d'ondes (14) respectivement voisine.

6. Dispositif selon la revendication 5, une énergie centrale de chacune des zones à sélection de longueurs d'ondes (14) différant de moins de 1 % d'une énergie centrale de la zone à sélection de longueurs d'ondes (14) respectivement voisine.

7. Dispositif selon l'une quelconque des revendications précédentes, des zones à sélection de longueurs d'ondes égales (14) voisines étant contiguës les unes aux autres.

8. Dispositif selon l'une quelconque des revendications précédentes, les sections réalisées en forme d'arc (20) présentant un côté supérieur planaire, des tranchées étant prévues respectivement entre les sections réalisées en forme d'arc (20).

9. Dispositif selon la revendication 8, la profondeur des tranchées entre les sections réalisées en forme d'arc (20) voisines augmentant continûment en direction du détecteur (16).

10. Dispositif selon l'une quelconque des revendications précédentes, la distance des sections (20) voisines le long de l'étendue longitudinale des sections (20) d'une première extrémité des sections (20) voisines à une deuxième extrémité des sections (20) voisines changeant continûment selon la relation de Fresnel.

11. Dispositif selon l'une quelconque des revendications précédentes, la distance des sections (20) voisines le long d'un axe (26) verticalement par rapport à l'étendue longitudinale des sections (20) d'une extrémité de la plaque zonée (12) tournée à l'opposé du détecteur (16) à une extrémité de la plaque zonée (12) tournée vers le détecteur (16) changeant continûment selon la relation de Fresnel.

12. Dispositif selon l'une quelconque des revendications précédentes, les sections réfléchissantes (20) présentant une courbure correspondant à la plage de longueurs d'ondes devant être mesurée ainsi qu'aux dimensions et aux distances géométriques de la source (10), de la plaque zonée (12) et du détecteur (16).

13. Dispositif selon l'une quelconque des revendications précédentes, le détecteur (16) étant formé de façon planaire et/ou la multiplicité des zones de réception (22) correspondantes étant disposées le long d'une ligne.

14. Utilisation d'un dispositif selon l'une quelconque des revendications précédentes en combinaison avec un détecteur de lignes ou de surfaces dans un microscope électronique à balayage ou dans un microscope électronique en transmission comme spectromètre à rayons X à dispersion de longueur d'ondes.

15. Utilisation d'un dispositif selon l'une des revendications 1 à 13 en combinaison avec un détecteur de lignes ou de surfaces sur une ligne de faisceaux de synchrotron ou sur une installation d'émission de rayons X induite par particules/protons comme spectromètre à rayons X à dispersion de longueur d'ondes.

Fig. 1a

Fig. 1b

Fig. 2a

Fig. 2b

12

20

18

Fig. 3

12

20

18

Fig. 4

32

16

30

10,11    28

12

Fig. 5

38

16

34,10    28

12

36,11

Fig. 6

10 ✳  28  16

11  12

Fig. 7

10 ✳  16

12

13

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19542679 A1
- US 6259764 B1
- DE 102007048743 B4